# FASCICULE DE BREVET EUROPEEN

(11) **EP 2 057 632 B1**
(45) Date de publication et mention de la délivrance du brevet: **28.11.2018**
(21) Numéro de dépôt: 07823726.0
(22) Date de dépôt: 17.08.2007
(51) Int. Cl.: G11B 27/10, G11B 27/11, H04N 7/173

(54) **PROCEDE DE GESTION D'UN PROGRAMME MULTIMEDIA, SERVEUR, TERMINAUX, SIGNAL ET PROGRAMMES INFORMATIQUES CORRESPONDANTS**
VERFAHREN ZUR VERWALTUNG EINES MULTIMEDIAPROGRAMMS, SERVER, ENDGERÄTE, SIGNAL UND ENTSPRECHENDE COMPUTERPROGRAMME
METHOD OF MANAGEMENT OF A MULTIMEDIA PROGRAM, SERVER, TERMINALS, SIGNAL AND CORRESPONDING COMPUTER PROGRAMS

(30) Priorité: 24.08.2006 FR 0607496
(43) Date de publication de la demande: 13.05.2009
(73) Titulaire: Orange, 75015 Paris (FR)
(72) Inventeur: JUMPERTZ, Sylvie, 35000 Rennes (FR); CUTULLIC, Christophe, 35410 Domloup (FR)
(86) Numéro de dépôt international: PCT/FR2007/051826
(87) Numéro de publication internationale: WO 2008/023129

(56) Documents cités:
- EP-A- 1 376 586
- US-A1- 2005 083 413
- US-B1- 6 717 507

## Description

### 1 Domaine de l'invention

Le domaine de l'invention est celui de la diffusion de programmes multimédia vers des terminaux.

L'invention concerne ainsi notamment le contrôle de la continuité de la restitution d'un contenu multimédia numérique sur différents terminaux, ainsi que le partage d'un tel contenu entre plusieurs utilisateurs.

L'invention s'applique à tout type de signaux multimédia comprenant du son, des images et/ou des données, et par exemple aux programmes audiovisuels.

En ce qui concerne de tels programmes audiovisuels, il est aujourd'hui possible de les visualiser sur de nombreux types de terminaux, tels que les téléviseurs, les ordinateurs personnels, les téléphones mobiles ou les assistants personnels (PDA).

L'invention concerne notamment la gestion de ces opérations.

### 2 Solutions de l'art antérieur

### 2.1 Art Antérieur

Une première solution technique proposée à un utilisateur est qu'il enregistre le programme concerné. On connaît actuellement différents types de dispositifs d'enregistrement, par exemple les magnétoscopes et les enregistreurs de DVD, qui permettent d'enregistrer des programmes sur un support d'enregistrement. On propose également des dispositifs à base de disque dur.

Ces différents dispositifs d'enregistrement permettent à un utilisateur d'enregistrer le programme audiovisuel qu'il est en train de visualiser sur un terminal, et de poursuivre la visualisation de ce programme plus tard. Cette visualisation différée peut se faire sur le même terminal de communication, ou sur un autre terminal, sous réserve qu'il présente les mêmes caractéristiques techniques, notamment en termes de standard, de taille et de format de restitution.

Par ailleurs, certains fournisseurs de télévision numérique offrent la possibilité à un abonné de sélectionner, moyennant paiement, un programme audiovisuel parmi un bouquet de programmes proposés. Une fois la transaction réalisée, l'utilisateur est alors libre de visualiser le programme à sa guise.

US 6 717 507 B1 divulgue un procédé de gestion d'un programme multimédia selon le préambule de la revendication 1. Dans ce cas, l'information de marquage est un signal émis par l'émetteur RF.

### 2.2 Inconvénients de l'Art Antérieur

Cependant, un inconvénient de ces techniques de l'art antérieur est qu'elles imposent chez l'utilisateur final la présence de dispositifs d'enregistrement coûteux, et souvent complexes à mettre en oeuvre.

Par ailleurs, ces techniques ne permettent pas la poursuite de la visualisation d'un programme audiovisuel sur un autre type de terminal que celui de départ. Il est en effet impossible de commencer, par exemple, la visualisation d'un programme audiovisuel sur un téléviseur, puis de reprendre cette visualisation sur un assistant personnel ou un téléphone mobile à un instant quelconque d'interruption de la visualisation. Les techniques actuelles ne peuvent pas prendre en compte la gestion des données nécessaires à la reprise du programme audiovisuel à l'instant en cours de visualisation sur un autre terminal.

Encore un autre inconvénient est que ces techniques ne permettent pas un échange aisé avec un autre utilisateur, à moins de lui transmettre, par exemple par courrier électronique ou liaison « pair-à-pair » un fichier complet qui a été enregistré au préalable. Ceci est en pratique peu envisageable, pour des raisons de bande passante et de débit disponibles, et en outre difficile à mettre en oeuvre de façon simple, notamment pour un utilisateur non spécialiste.

Des problèmes similaires apparaissent également pour les différents types de signaux multimédia.

### 3 Exposé de l'invention

Ces objectifs, ainsi que d'autres qui apparaîtront par la suite, sont atteints selon l'invention à l'aide d'un procédé de gestion d'un programme multimédia, restitué par un terminal d'un utilisateur, selon la revendication 1.

Ainsi, l'utilisateur dispose de façon simple et ergonomique d'une donnée qui lui permet de reprendre la restitution à tout moment, et/ou de la transmettre à un autre utilisateur.

Selon un mode de réalisation particulier de l'invention, ladite information de marquage est une information visuelle, destinée à être affichée sur un écran dudit terminal.

Cette approche permet une mise en oeuvre très simple et intuitive, même pour un utilisateur peu habitué aux manipulations d'appareils électroniques. En effet, l'information apparaît directement et visiblement sur son écran, et il peut la mémoriser et la stocker simplement.

Selon ce mode de réalisation, ladite information visuelle de marquage peut notamment être affichée sous la forme d'un code en deux dimensions.

Cette technique est en effet bien adaptée à la restitution sur un écran, et à une prise de vue, selon l'approche détaillée ci-après.

Le procédé de l'invention comprend les étapes suivantes :
- prise d'une vue de ladite information visuelle de marquage à l'aide d'un terminal équipé de moyens de prise de vues ;
- traitement de ladite information visuelle de marquage, de façon à obtenir une donnée de pilotage d'un serveur de gestion distant permettant un accès audit programme multimédia.

Selon cette approche très simple à mettre en oeuvre, l'utilisateur utilise un appareil capable de prendre des vues (par exemple un appareil photo numérique ou un téléphone mobile), pour prendre en photo l'information qui apparaît sur son écran. Il n'a pas besoin de traiter ou d'analyser lui-même cette information : l'analyse et le décodage de l'information visuelle est réalisée par l'appareil, ou par un élément tiers, auquel l'appareil transmet l'image capturée.

Selon un aspect particulier de l'invention, le procédé comprend une étape d'enregistrement d'au moins une portion dudit programme multimédia dans un serveur de stockage.

Selon les cas, le programme peut être enregistré :
- systématiquement (voire être délivré dès l'origine par un serveur de diffusion de flux de données (ou « streaming »)) ;
- à partir de la requête.

Ce stockage permet, de façon simple, la restitution en différé, sur requête de l'utilisateur.

Dans ce cas, on peut prévoir une étape de suppression du programme enregistré sur le serveur de stockage, après une date de péremption prédéterminée.

Ceci permet de gérer la capacité de stockage du serveur.

Selon encore un autre aspect particulier, le procédé comprend, dans ledit terminal multimédia, les étapes de :
- envoi d'une requête audit serveur de gestion contrôlant un serveur de stockage contenant ledit programme, comprenant ladite donnée de pilotage ;
- restitution différée dudit programme, à partir dudit instant de restitution, à l'aide d'un signal correspondant transmis par un serveur de gestion connecté audit serveur de stockage.

De cette façon, la reprise de la restitution en différé est obtenue simplement et efficacement, avec une unique requête déduite de l'information de marquage.

Dans ce cas, ladite requête peut comprendre en outre au moins une des informations appartenant au groupe comprenant :
- une clé d'accès ;
- un identifiant dudit utilisateur ;
- un identifiant dudit programme multimédia ;
- une référence temporelle correspondant audit instant de restitution.

Ces informations permettent d'optimiser le traitement des données, et par exemple de bien identifier et contrôler les droits du utilisateur.

Selon une caractéristique particulière, ladite requête de marquage peut entraîner un gel de l'image présentée sur ledit écran. C'est sur cette image fixe qu'apparaît l'information de marquage.

Le procédé peut également, optionnellement, comprendre les étapes suivantes :
- génération d'une demande d'information de marquage vers un serveur de gestion ;
- réception et restitution de ladite information de marquage.

Selon une autre variante, des informations de marquage peuvent être introduites périodiquement dans le signal multimédia (par exemple toutes les secondes), pour restitution immédiate en cas de requête.

Selon une application particulière de l'invention, le procédé peut également comprendre une étape d'envoi de ladite information de marquage à au moins un second utilisateur, de façon à permettre une restitution dudit programme multimédia par le ou lesdits seconds utilisateurs, à partir dudit instant de restitution.

Cette application permet de partager le programme avec un tiers.

Ladite étape de traitement peut comprendre, selon un aspect particulier de l'invention, les étapes suivantes :
- décodage de ladite information de marquage, pour obtenir une donnée d'interrogation d'un serveur de gestion ;
- transmission de ladite donnée d'interrogation audit serveur de gestion ;
- réception d'informations de description dudit programme multimédia, transmises par ledit serveur de gestion.

De cette façon, l'utilisateur peut obtenir des information de description du programme concerné (titre, objet, chaîne, type de programme,...).

L'invention concerne également un terminal selon la revendication 8.

A titre d'exemple, il peut s'agir d'un récepteur multimédia, ou d'un téléviseur.

Selon un autre aspect de l'invention, celle-ci concerne un terminal d'acquisition selon la revendication 10.

L'invention concerne encore un procédé de gestion d'un programme multimédia mis en oeuvre dans un tel terminal d'acquisition selon la revendication 11.

L'invention concerne également un produit programme d'ordinateur téléchargeable depuis un réseau de communication et/ou stocké sur un support lisible par un ordinateur et/ou exécutable sur un microprocesseur, comprenant des instructions de codes de programme pour la mise en oeuvre des étapes du procédé de gestion d'un programme multimédia mise en oeuvre dans un terminal d'acquisition tel que décrit ci-dessus.

L'invention concerne encore un serveur de gestion d'un programme multimédia, restitué sur un écran d'un terminal multimédia d'un utilisateur, selon la revendication 13.

L'invention concerne encore le procédé de gestion de programmes multimédia dans un tel serveur de gestion, destinés à être restitués sur un écran d'un terminal multimédia d'un utilisateur selon la revendication 14.

L'invention concerne également un poduit programme d'ordinateur téléchargeable depuis un réseau de communication et/ou stocké sur un support lisible par un ordinateur et/ou exécutable sur un microprocesseur, comprenant des instructions de codes de programme pour la mise en oeuvre des étapes du procédé de gestion d'un programme multimédia mise en oeuvre dans un serveur de gestion tel que décrit ci-dessus.

L'invention concerne enfin un signal de gestion d'un programme multimédia, transmis par un serveur de contrôle à un terminal multimédia, selon la revendication 16.

Par exemple, un tel signal peut comprendre au moins un des champs de données suivants :
- un champ portant une clé d'accès ;
- un champ portant un identifiant dudit utilisateur ;
- un champ portant un identifiant dudit programme multimédia ;
- un champ portant une référence temporelle correspondant audit instant de restitution.

### 4 Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une illustration d'un exemple d'architecture globale du réseau permettant la continuité de la visualisation et/ou du partage d'un programme audiovisuel ;
- la figure 2 illustre de manière schématique les différentes étapes mises en oeuvre dans un mode de réalisation du procédé de l'invention ;
- la figure 3 présente la structure d'un serveur de gestion selon un mode de réalisation de l'invention ;
- la figure 4 présente un exemple de structure d'un terminal d'acquisition mis en oeuvre dans l'architecture de la figure 1 ;
- la figure 5 est un exemple de structure d'un terminal de restitution mis en oeuvre dans l'architecture de la figure 1 ;
- la figure 6 est en exemple de structure de signal de gestion reçu par le terminal de la figure 5.

### 5 Description détaillée de l'invention

### 5.1 Rappel du principe de l'invention, dans le cas de programmes audiovisuels

La présente invention concerne donc la gestion de la restitution d'un programme multimédia, restitué dans un premier temps par un premier terminal d'un utilisateur. Elle propose une solution simple et efficace pour interrompre cette restitution, puis la reprendre en différé, sans nécessiter d'enregistrement ni de stockage par cet utilisateur. Cette reprise de restitution peut être effectué sur le premier terminal, mais également sur un second terminal, qui peut le cas échéant appartenir à un second utilisateur, à qui le premier a fourni les informations nécessaires.

L'invention apporte ainsi une solution simple et efficace au problème de la gestion de la continuité de la restitution, et du partage entre deux utilisateurs d'un programme multimédia, sur différents types de terminaux de communication. Ces deux applications (continuité et partage) peuvent bien sûr être mises en oeuvre indépendamment l'une de l'autre.

Le mode de réalisation décrit par la suite concerne la gestion de programmes audiovisuels, et en particulier la gestion de la continuité de la visualisation et le partage d'un programme audiovisuel entre deux utilisateurs sur différents types de terminaux de communication. La même approche peut bien sûr être mise en oeuvre pour d'autres types de programmes et de signaux.

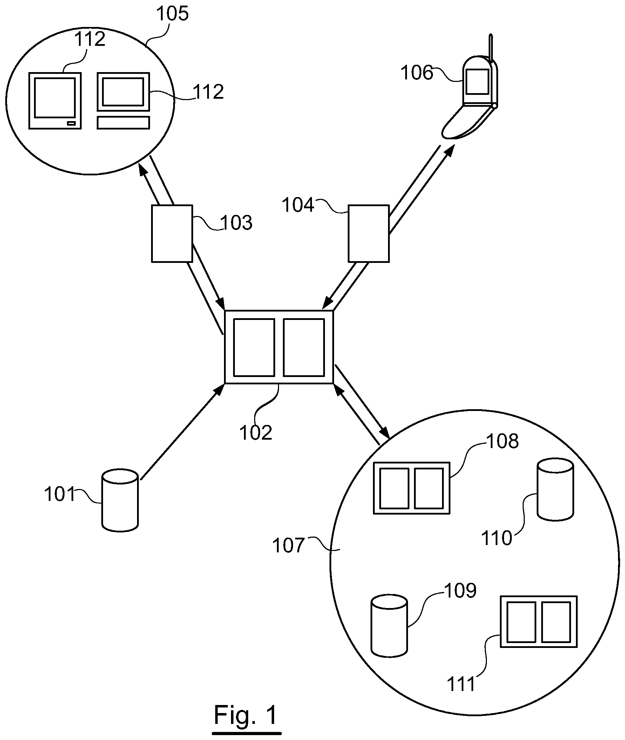

Ainsi, on présente, en relation avec la ***figure 1******,*** un exemple d'architecture globale du réseau permettant la mise en oeuvre de l'invention dans cette application.

Une plateforme de diffusion 101 met à disposition d'un serveur de gestion 102 un contenu (ou programme) audiovisuel. Ce contenu audiovisuel est transmis ou diffusé par le serveur de gestion 102 vers un réseau domestique 105 et vers une plateforme de services numériques 107, pour être restitué sur un premier terminal audiovisuel 112 d'un utilisateur.

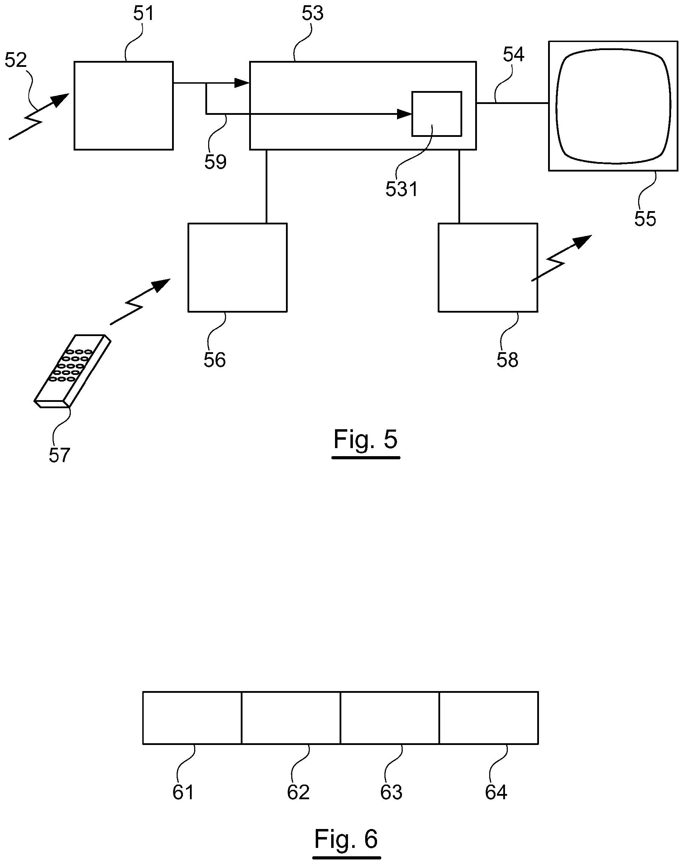

Un exemple d'un tel terminal 112 est illustré en figure 5. Il comprend des moyens de réception 51 d'un signal audiovisuel 52, des moyens de traitement 53 du signal reçu 52 (par un microprocesseur, un processeur de signal (DSP), une mémoire...), qui délivrent un signal d'images 54 pouvant être restitué sur un écran de visualisation 55.

Le terminal 112 comprend également des moyens de réception de commandes 56 de la part d'une télécommande 57, et des moyens 58 d'émission d'une requête pour la mise en oeuvre de l'invention, comme décrit par la suite. Les moyens de traitement 53 comprennent notamment des moyens spécifiques 531 pour la mise en oeuvre de l'invention, selon le procédé présenté ci-après.

L'utilisateur peut décider d'interrompre la diffusion du contenu audiovisuel sur ce premier terminal 112 à tout moment pour reprendre ensuite la visualisation de celui-ci sur un second terminal (ou sur le premier terminal), à l'instant d'interruption de la visualisation, ou le cas échéant, un peu avant cet instant.

Selon l'invention, lorsque l'utilisateur interrompt la visualisation du programme diffusé, une information de marquage est transmise au terminal par le serveur de gestion 102. Dans le mode de réalisation décrit, il s'agit d'une information de marquage visuelle, qui peut être affichée sur l'écran.

Cette information est ensuite mémorisée par l'utilisateur. Il peut en effet prendre en photo cette information visuelle de marquage au moyen d'un terminal d'acquisition 106, par exemple un téléphone mobile. Cette information est alors conservée dans la mémoire du téléphone afin de pouvoir ensuite être décodée et exploitée au moment voulu par l'utilisateur.

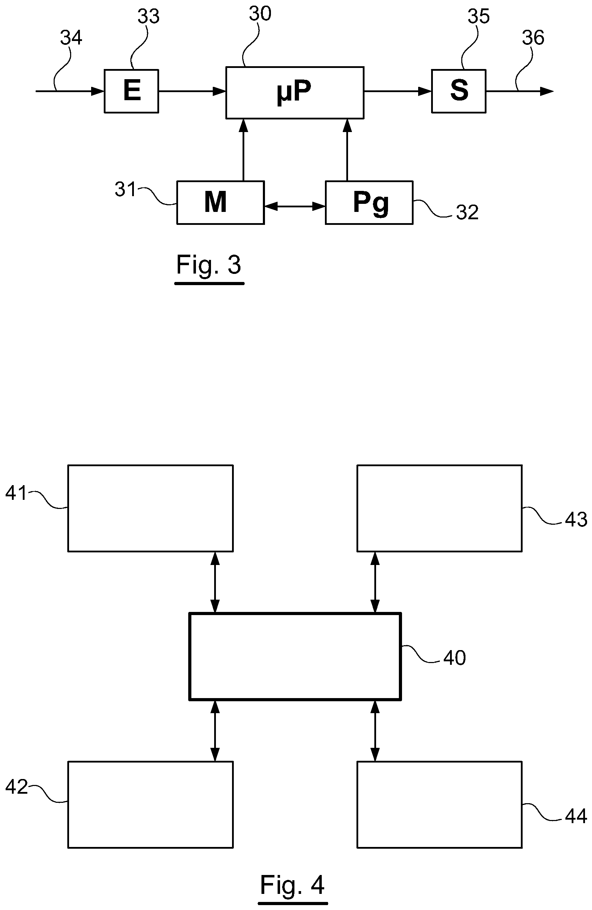

Un exemple de structure d'un terminal d'acquisition est illustré schématiquement par la ***figure 4******.*** Elle comprend un processeur 40 permettant de contrôler l'ensemble des éléments du terminal, des moyens de prise de vues 43 classiques, un écran 41 permettant de visualiser les prises de vue, des moyens d'émission 44 d'images récupérées éventuellement traitées par le processeur 40, et des moyens de réception d'informations extérieures au terminal. Les moyens de réception, l'écran et/ou le processeur peuvent être optionnels.

Une fois cette information décodée, l'utilisateur peut obtenir, par l'intermédiaire du serveur de gestion 102, des informations de description concernant le programme audiovisuel concerné, et peut, lorsqu'il le désire, requérir la reprise de la visualisation sur son terminal d'acquisition 106.

L'invention repose ainsi sur la mise en oeuvre d'une information de marquage par un utilisateur lors de la visualisation d'un programme audiovisuel sur un terminal.

L'utilisateur n'a pas à s'occuper d'un enregistrement en local, les opérations étant gérées par un serveur distant. Il a simplement besoin de mémoriser l'information de marquage, par exemple en en prenant une photographie.

### 5.2 Description détaillée d'un mode de réalisation

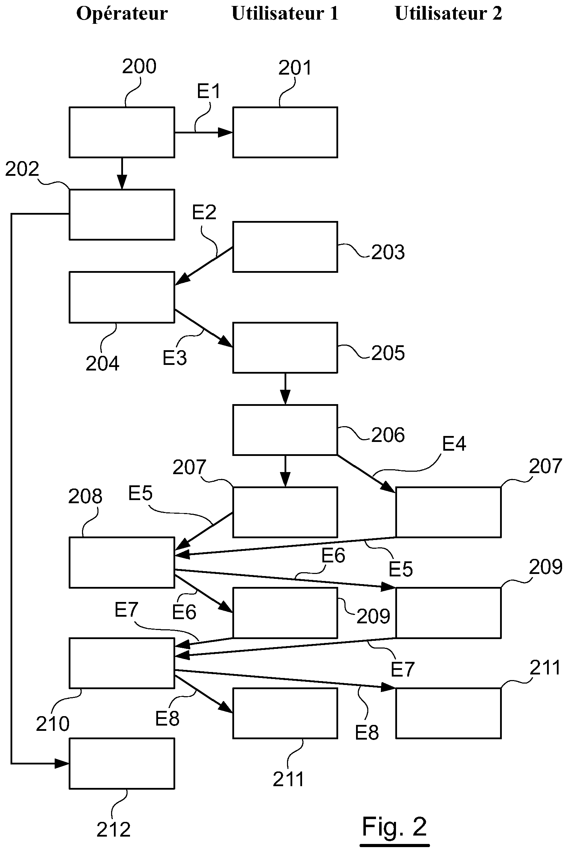

On présente ci-après de façon plus détaillée un mode de réalisation préférentiel de l'invention permettant la continuité de la visualisation et/ou du partage d'un programme audiovisuel, à l'aide de la ***figure 2******,*** qui illustre de manière schématique les différentes étapes mises en oeuvre dans ce mode de réalisation du procédé de contrôle de la continuité et/ou du partage d'un programme audiovisuel de l'invention.

Dans un premier temps, un premier utilisateur visualise 201 un programme audiovisuel émis 200 à partir d'une plateforme de diffusion 101. Ce programme audiovisuel est affiché par exemple sur un écran d'un terminal audiovisuel 112. Il est transmis E1 par un serveur de gestion 102 qui réalise l'interface entre le terminal audiovisuel 112 et une plateforme de diffusion 101.

La structure du serveur de gestion 102 est illustrée schématiquement par la ***figure 3******.*** Il comprend une mémoire M 31, et une unité de traitement 30 équipée d'un microprocesseur, qui est piloté par un programme d'ordinateur (ou application) Pg. L'unité de traitement 30 reçoit en entrée, via un module d'interface d'entrée réseau E 33, des requêtes 34, que le microprocesseur traite, selon les instructions du programme Pg 32, pour générer des réponses 36, qui sont transmises via un module d'interface de sortie réseau S 35.

Simultanément à cette première étape, se déroule en continu un enregistrement 202 dans sa totalité du programme audiovisuel, provenant de la plateforme de diffusion 101, sur un serveur de stockage 111 appartenant à une plateforme de services numériques 107 et contrôlé par le serveur de gestion 102.

Dans une deuxième étape 203 du procédé selon ce mode de réalisation, le premier utilisateur interrompt la diffusion du programme audiovisuel en cours de visualisation sur son terminal 112. Il déclenche l'interruption du programme en appuyant sur une commande prédéterminée d'un interacteur, par exemple une télécommande.

Dès l'interruption de la diffusion du programme par le premier utilisateur, une requête de marquage, correspondant à l'instant de visualisation en cours, est générée par le terminal 112. Cette requête de marquage conduit au gel de l'image sur l'écran du terminal de ce premier utilisateur, et entraîne la génération d'une demande d'information visuelle de marquage, envoyée E2 via une passerelle 103, par exemple un modem, vers le serveur de gestion 102.

Le serveur de gestion 102 génère à son tour une demande d'information visuelle de marquage à un serveur applicatif 108, qui renvoie au serveur de gestion 102 une information visuelle de marquage correspondant au programme audiovisuel regardé. Cette information visuelle de marquage est ensuite acheminée E3 du serveur de gestion 102 vers le terminal audiovisuel 112.

Dans d'autres modes de réalisation, la construction et la transmission de l'information de marquage peut bien sûr être construite de façon différente, et part exemple générée directement par le serveur de gestion 102.

Cette information visuelle de marquage se présente par exemple sous la forme d'un signal 59 (***figure 5*** ; traité par les moyens 531) dont la structure est illustrée en ***figure 6******.*** Il comprend un ensemble de champs 61 à 64 contenant respectivement au moins les informations d'identification suivantes :
- une clé d'accès 61 qui permet d'autoriser ponctuellement l'utilisateur (ou un autre utilisateur) à visualiser du programme audiovisuel ;
- un identifiant 62 du premier utilisateur du programme audiovisuel qui permet d'authentifier l'utilisateur ;
- un identifiant 63 du programme audiovisuel qui fournit des caractéristiques du programme ;
- une référence temporelle 64 correspondant à l'instant de visualisation.

Dans une troisième étape 205 du procédé, l'information visuelle de marquage est affichée en superposition de l'image figée sur l'écran du terminal 112 de l'utilisateur.

Cette information visuelle de marquage peut notamment être affichée sous la forme d'un code en deux dimensions, par exemple de type « semacode ». Elle apparaît en superposition de l'image figée sur l'écran du terminal audiovisuel 112.

D'autres variantes du code graphique à deux dimensions peuvent bien sûr être utilisées, par exemple un QR code, un DataMatrix, un Maxi code, etc... Le code est préférentiellement choisi de façon qu'il puisse être photographiée, puis décodé à partir de la photographie.

Il peut également s'agir d'une information numérique ou textuelle.

Cette information visuelle de marquage permettra au premier utilisateur de visualiser en différé son programme audiovisuel à partir de l'instant de visualisation en cours, le cas échéant sur un autre terminal (par exemple celui qui a permis la photographie), ou à un second utilisateur de visualiser ce programme.

Ainsi, dans une quatrième étape 206 du procédé selon ce mode particulier de réalisation, le premier utilisateur réalise une prise de vue de l'information visuelle de marquage à l'aide d'un terminal d'acquisition 106 équipé de moyens de prise de vues, par exemple un téléphone mobile. Cette information visuelle de marquage est alors stockée au sein du terminal d'acquisition 106, par exemple dans la mémoire interne du téléphone mobile.

Dans le cas où l'information n'est pas une image, elle peut par exemple être stocké dans le terminal audiovisuel et/ou échangé avec un autre terminal par une liaison adaptée (infrarouge, « Blue Tooth », MMS, ...).

Selon une utilisation particulière de ce mode de réalisation, l'utilisateur peut également envoyer E4 par une liaison adaptée (infrarouge, « Blue Tooth », MMS, ...), au moyen d'une passerelle 104, l'information visuelle de marquage à un second utilisateur de façon à lui permettre une visualisation du programme audiovisuel à partir de l'instant de visualisation.

Une cinquième étape du procédé, selon ce mode de réalisation de l'invention, consiste à traiter l'information visuelle de marquage, enregistrée sous la forme d'une image (prise de vue) sur un terminal d'acquisition 106, par exemple un terminal de radiocommunication, afin d'obtenir les informations d'identification et une donnée de pilotage de la plateforme de services numériques 107 (ou serveur de gestion distant) permettant un accès au programme audiovisuel. Cette cinquième étape du procédé comprend plusieurs sous-étapes.

Une première sous-étape est le décodage 207 de l'information visuelle de marquage par le terminal d'acquisition 106 de l'utilisateur, pour obtenir des informations de description et la donnée de pilotage. Ce décodage est réalisé au sein du terminal d'acquisition 106 à l'aide d'algorithmes de traitement d'images adaptés.

Dans une deuxième sous-étape, une requête d'interrogation est transmise E5 au serveur de gestion 102 par l'utilisateur afin de récupérer des informations de description du programme audiovisuel. Le serveur de gestion 102 accède alors à une base de données 109 appartenant à la plateforme de service numérique 107 afin d'obtenir 208 des informations de description du programme audiovisuel.

Dans un autre mode de réalisation, on peut également prévoir que les informations de marquage E3 comprennent directement l'ensemble de ces données. Dans ce cas, cette dernière sous-étape n'est pas mise en oeuvre. De même, la première sous-étape n'est pas nécessaire si ces informations de marquage comprennent directement des données numériques ou de texte.

Une troisième sous-étape est la transmission de ces informations de description du programme audiovisuel E6 par le serveur de gestion 102 vers le terminal d'acquisition 106.

L'utilisateur peut alors prendre connaissance de ces informations de description qui comprennent par exemple au moins les informations suivantes :
- titre ;
- chaîne de diffusion ;
- date et heure de diffusion ;
- résumé, réalisateur, casting.

Dans une sixième étape 209 du procédé selon ce mode de réalisation de l'invention, l'utilisateur, après avoir obtenu les informations de description E6 liées au décodage de l'information visuelle de marquage, commande la reprise de la visualisation du programme audiovisuel sur son terminal d'acquisition 106. Cette action génère l'envoi d'une requête E7 vers le serveur de gestion 102, qui comprend une donnée de pilotage permettant un accès au programme audiovisuel mémorisé.

La septième étape 211 du procédé, selon ce mode de réalisation préférentiel, est alors la visualisation en différé du programme audiovisuel à partir de l'instant en cours de visualisation, le cas échéant sur un terminal distinct du premier terminal.

Pour cela, la requête envoyée lors de la sixième étape 209 est traitée 210 par le serveur de gestion 102. Il commande alors au serveur de streaming 110 de la plateforme de services numériques 107 de lancer la diffusion du programme audiovisuel. Le serveur de streaming 110 accède ainsi au serveur de stockage 111 pour récupérer le contenu du programme audiovisuel. Le serveur de streaming 110 transmet E8 alors, par l'intermédiaire du serveur de gestion 102, le contenu du programme audiovisuel au terminal d'acquisition 106 de l'utilisateur qui peut dès lors reprendre la visualisation 211 du programme sur l'écran de son terminal d'acquisition 106 à partir de l'instant en cours de visualisation précédant l'interruption.

Le serveur de gestion peut adapter, si nécessaire, le flux de données aux caractéristiques de réception du terminal qui a requis la reprise de la diffusion.

Une huitième étape 212 est la suppression du programme audiovisuel enregistré sur le serveur de stockage 111 après le dépassement d'une date de péremption et/ou après la visualisation 211.

Selon une variante de ce mode particulier de réalisation de l'invention, l'utilisateur peut également contrôler la diffusion du programme audiovisuel sur son terminal d'acquisition 106. Il peut ainsi accélérer, ralentir, revenir en arrière ou même mettre en pause la diffusion du programme audiovisuel.

### 5.3 Premier exemple d'application

Un premier exemple d'application du procédé décrit est la gestion de la continuité de la visualisation d'un programme audiovisuel sur différents terminaux.

Un utilisateur, abonné à un service de télévision numérique et ayant accès à un ou plusieurs bouquets de chaînes numériques, peut visualiser un programme sur son téléviseur 112, ou sur tout autre terminal autorisant la diffusion de programme audiovisuel numérique, par exemple un ordinateur, un téléphone mobile ou un assistant personnel (PDA).

Visualisant 201 un programme audiovisuel sur son téléviseur 112, l'utilisateur est obligé de s'absenter et d'interrompre la visualisation de ce programme. Cependant, afin de reprendre la visualisation du programme, par exemple sur son téléphone mobile, plus tard, il interrompt 203 la restitution en cours en appuyant sur le bouton de sa télécommande.

Cette opération entraîne le gel de l'image sur l'écran du téléviseur 112 et l'apparition d'un code graphique à deux dimensions en superposition de l'image figée 205. L'utilisateur peut alors d'utiliser cette information visuelle de marquage pour une reprise ultérieure, en prenant une photo 206 du code graphique affiché sur l'écran de son téléviseur 112, à l'aide de l'appareil photo intégré à son téléphone mobile 106.

Une fois installé dans le bus, l'utilisateur, souhaitant reprendre la visualisation du programme audiovisuel sur son téléphone mobile 106, lance le décodage du code graphique 2D, stocké dans la mémoire de son téléphone 207. Il récupère E6 alors les informations de description du programme qu'il était en train de visualiser lorsqu'il a dû s'absenter.

L'utilisateur peut dès lors commander la reprise de la visualisation 209 de son programme sur son téléphone mobile 106. Il visualise alors en différé le programme audiovisuel à partir de l'instant d'interruption 211 jusqu'à la fin.

### 5.4 Second exemple d'application

Un second exemple d'application du procédé, selon le mode de réalisation précité, est le partage d'une séquence d'un programme audiovisuel entre deux utilisateurs.

Un utilisateur, qui visualise 201 sur son téléviseur 112 une émission provenant d'un bouquet de chaînes numériques, décide d'informer un de ses amis de la diffusion de cette émission. Il arrête la diffusion de ce programme 203 en appuyant sur le bouton prévu à cet effet de sa télécommande. L'image sur l'écran de télévision se fige alors et un code graphique à deux dimensions apparaît en superposition 205 qu'il décide d'envoyer à son ami.

Il utilise alors son téléphone mobile 106 pour photographier le code graphique 206, qui est alors stocké dans la mémoire interne du téléphone. L'utilisateur envoie ensuite la photographie du code graphique à son ami E4 à l'aide d'un message multimédia, par exemple MMS (pour « Multimedia Messaging Service » en anglais, soit « service de messagerie multimédia »).

L'ami de l'utilisateur peut, une fois le message contenant le code graphique reçu, activer le décodage du code graphique 207 sur son propre téléphone mobile. Il obtient alors les informations d'identification et une donnée de pilotage permettant un accès à l'émission. Après l'envoi d'une donnée d'interrogation, il peut également obtenir les informations de description de l'émission regardée par l'utilisateur. Muni de ces informations de descriptions, l'ami de l'utilisateur peut décider de lancer la visualisation du reportage 209 lorsqu'il le souhaite.

Après avoir requis le lancement de la visualisation 209, l'ami de l'utilisateur peut commencer à regarder l'émission à partir de l'instant d'interruption 211, ou légèrement avant. Il a également la possibilité de revenir en arrière, mettre en pause, accélérer ou même arrêter la diffusion de l'émission sur l'écran de son téléphone mobile 106.

### 5.5 Autres modes de réalisation

Selon un autre mode de réalisation préférentiel, on peut prévoir la mise en place d'une étape d'enregistrement du programme audiovisuel regardé par l'utilisateur, uniquement à partir de l'arrêt de la diffusion du programme par l'utilisateur.

Par ailleurs, l'invention ne se limite pas aux terminaux de types téléphones mobiles, mais peut s'appliquer plus généralement à de nombreux types de terminaux, comme les PDA, les micro-ordinateurs...

L'invention ne se limite bien sûr pas au cas d'une seule information de marquage, mais peut au contraire permettre de générer plusieurs informations de marquage, pour un ou plusieurs flux multimédia, ce qui permet notamment d'adresser des informations de marquage distinctes d'un même flux, correspondant ou non à des instants différents, à plusieurs personnes.

## Revendications

1. Procédé de gestion d'un programme multimédia transmis via un réseau de communication, comprenant les étapes suivantes :
- restitution (201) dudit programme multimédia, par un terminal (112) ;
- obtention (205) d'une information de marquage relative à un instant de restitution dudit programme multimédia, associée à une requête de marquage générée sur ordre d'un utilisateur dudit terminal ;
**caractérisé en ce que** ladite information de marquage est une information visuelle, destinée à être affichée sur un écran dudit terminal (112), qu'une prise de vue de ladite information de marquage est effectuée (206) à l'aide d'un terminal (106) équipé de moyens de prises de vue et que la prise de vue de ladite information de marquage est traitée (207) de façon à obtenir une donnée de pilotage d'un serveur de gestion distant permettant un accès audit programme multimédia pour le restituer en différé à partir dudit instant de restitution.

2. Procédé selon la revendication 1, **caractérisé en ce que** ladite information visuelle de marquage est affichée sous la forme d'un code en deux dimensions.

3. Procédé selon l'une quelconque des revendications 1 à 2, **caractérisé en ce qu'**il comprend une étape d'enregistrement (202) d'au moins une portion dudit programme multimédia dans un serveur de stockage.

4. Procédé selon l'une quelconque des revendications 1 et 3, **caractérisé en ce qu'**il comprend, dans ledit terminal, les étapes de :
- envoi d'une requête (E7) audit serveur de gestion contrôlant un serveur de stockage contenant ledit programme, comprenant ladite donnée de pilotage ;
- restitution (211) différée dudit programme, à partir dudit instant de restitution, à l'aide d'un signal correspondant transmis par un serveur de gestion connecté audit serveur de stockage.

5. Procédé selon la revendication 4, **caractérisé en ce que** ladite requête comprend en outre au moins une des informations appartenant au groupe comprenant :
- une clé d'accès ;
- un identifiant dudit utilisateur ;
- un identifiant dudit programme multimédia ;
- une référence temporelle correspondant audit instant de restitution.

6. Procédé selon l'une quelconque des revendications 1 à 5, **caractérisé en ce qu'**il comprend une étape d'envoi (E4) de ladite information de marquage à au moins un second utilisateur, de façon à permettre une restitution dudit programme multimédia par le ou lesdits seconds utilisateurs, à partir dudit instant de restitution.

7. Procédé selon l'une quelconque des revendications 1 à 6, **caractérisé en ce que** ladite étape de traitement comprend les étapes suivantes :
- décodage (207) de ladite information de marquage, pour obtenir une donnée d'interrogation d'un serveur de gestion ;
- transmission (E5) de ladite donnée d'interrogation audit serveur de gestion ;
- réception (E6) d'informations de description dudit programme multimédia, transmises par ledit serveur de gestion.

8. Terminal multimédia (112), **caractérisé en ce qu'**il comprend :
- des moyens de restitution (51) d'un programme multimédia sur ledit terminal multimédia, ledit programme multimédia étant transmis via un réseau de communication ;
- des moyens de génération (53) d'une requête de marquage, relative à un instant de restitution dudit programme multimédia, générée sur ordre d'un utilisateur dudit terminal (112) ;
- des moyens de présentation (55), par ledit terminal, d'une information de marquage relative à un instant de restitution dans ledit programme multimédia, pour restituer ledit programme multimédia à partir dudit instant de restitution, ladite information de marquage étant une information visuelle sous la forme d'un code en deux dimensions, destinée à être capturée à l'aide d'un terminal équipé de moyens de prises de vue et à être traitée de façon à obtenir une donnée de pilotage d'un serveur de gestion distant permettant un accès audit programme multimédia.

9. Produit programme d'ordinateur téléchargeable depuis un réseau de communication et/ou stocké sur un support lisible par un ordinateur et/ou exécutable sur un microprocesseur,
**caractérisé en ce qu'**il comprend des instructions de programme pour la mise en oeuvre des étapes du procédé de gestion d'un programme multimédia mis en oeuvre dans un terminal multimédia (112), selon l'une des revendications 1 à 7.

10. Terminal d'acquisition (106), **caractérisé en ce qu'**il comprend :
- des moyens de prise de vue (43) d'une information de marquage dans un programme multimédia transmis via un réseau de communication, ladite information de marquage étant délivrée par un terminal multimédia et correspondant à un instant de restitution dudit programme multimédia, ladite information de marquage étant une information visuelle affichée sur un écran dudit terminal multimédia ;
- des moyens de traitement (40) de la prise de vue de ladite information de marquage, pour restituer ledit programme multimédia à partir dudit instant de restitution.

11. Procédé de gestion d'un programme multimédia transmis via un réseau de communication, le procédé étant mis en oeuvre dans un terminal d'acquisition (106), **caractérisé en ce qu'**il comprend les étapes suivantes :
- prise de vue (206) d'une information de marquage dans un programme multimédia, délivrée par un terminal multimédia (112) et correspondant à un instant de restitution dudit programme multimédia, ladite information de marquage étant une information visuelle affichée sur un écran dudit terminal multimédia ;
- traitement (207) de la prise de vue de ladite information de marquage, pour restituer ledit programme multimédia à partir dudit instant de restitution.

12. Produit programme d'ordinateur téléchargeable depuis un réseau de communication et/ou stocké par un ordinateur et/ou exécutable par un microprocesseur,
**caractérisé en ce qu'**il comprend les instructions de code de programme pour la mise en oeuvre des étapes du procédé de gestion d'un programme multimédia mis en oeuvre dans un terminal d'acquisition (106), selon la revendication 11.

13. Serveur de gestion d'un programme multimédia transmis via un réseau de communication et restitué sur un écran d'un terminal multimédia d'un utilisateur, **caractérisé en ce qu'**il comprend :
- des moyens de réception d'une requête de marquage, relative à un instant de restitution, générée sur ordre d'un utilisateur dudit terminal ;
- des moyens de transmission audit terminal multimédia d'une information de marquage relative à un instant de restitution dudit programme multimédia, associée à ladite requête de marquage, ladite information de marquage étant une information visuelle sous la forme d'un code en deux dimensions et destinée à être restituée par ledit terminal multimédia et à être capturée à l'aide d'un terminal équipé de moyens de prises de vue ;
- des moyens de réception d'une demande de transmission différée, basée sur le contenu de ladite information de marquage ;
- des moyens de contrôle d'une transmission différée dudit programme multimédia à partir dudit instant de restitution, à l'aide de ladite donnée de marquage, vers ledit utilisateur et/ou au moins un second utilisateur.

14. Procédé de gestion de programmes multimédia, transmis via un réseau de communication, dans un serveur de gestion, destinés à être restitués sur un écran d'un terminal multimédia d'un utilisateur, **caractérisé en ce qu'**il comprend les étapes suivantes :
- réception d'une requête de marquage générée sur ordre d'un utilisateur dudit terminal ;
- transmission (E3) audit terminal multimédia d'une information de marquage relative à un instant de restitution dudit programme multimédia, associée à ladite requête de marquage, ladite information de marquage étant une information visuelle sous la forme d'un code en deux dimensions et destinée à être restituée par ledit terminal multimédia et à être capturée à l'aide d'un terminal équipé de moyens de prises de vue ;
- réception d'une demande de transmission différée, basée sur le contenu de ladite information de marquage ;
- transmission (E8) différée dudit programme multimédia à partir dudit instant de restitution, à l'aide de ladite donnée de marquage, vers ledit utilisateur et/ou au moins un second utilisateur.

15. Produit programme d'ordinateur téléchargeable depuis un réseau de communication et/ou stocké sur un support lisible par ordinateur et/ou exécutable par un microprocesseur,
**caractérisé en ce qu'**il comprend des instructions de code de programme pour la mise en oeuvre des étapes du procédé de gestion de programmes multimédia dans un serveur de gestion, selon la revendication 14.

16. Signal de gestion d'un programme multimédia, transmis, via un réseau de communication, par un serveur de contrôle à un terminal multimédia, **caractérisé en ce qu'**il comprend des données de contrôle sous la forme d'une information de marquage dans un programme multimédia, en réponse à une requête dudit terminal multimédia, et représentative d'un instant de restitution, ladite information de marquage étant une information visuelle sous la forme d'un code en deux dimensions et destinée à être affichée sur un écran dudit terminal multimédia.

17. Signal selon la revendication 16, **caractérisé en ce qu'**il comprend au moins un des champs de données suivants :
- un champ portant une clé d'accès (61) ;
- un champ portant un identifiant (62) dudit utilisateur ;
- un champ portant un identifiant (63) dudit programme multimédia ;
- un champ portant une référence temporelle (64) correspondant audit instant de restitution.

## Patentansprüche

1. Verfahren zur Verwaltung eines über ein Kommunikationsnetzwerk übertragenen Multimedia-Programms, das die folgenden Schritte enthält:
- Wiedergabe (201) des Multimedia-Programms durch ein Endgerät (112);
- Erhalt (205) einer Kennzeichnungsinformation bezüglich eines Wiedergabezeitpunkts des Multimedia-Programms, die einer auf Befehl eines Benutzers des Endgeräts generierten Kennzeichnungsanforderung zugeordnet ist;
**dadurch gekennzeichnet, dass** die Kennzeichnungsinformation eine visuelle Information ist, die dazu bestimmt ist, auf einem Bildschirm des Endgeräts (112) angezeigt zu werden, dass eine Bildaufnahme der Kennzeichnungsinformation mit Hilfe eines Endgeräts (106) ausgeführt wird (206), das mit Bildaufnahmeeinrichtungen ausgestattet ist, und dass die Bildaufnahme der Kennzeichnungsinformation so verarbeitet wird (207), dass ein Steuerdatenwert eines fernen Verwaltungsservers erhalten wird, der einen Zugang zum Multimedia-Programm erlaubt, um es ab dem Wiedergabezeitpunkt zeitversetzt wiederzugeben.

2. Verfahren nach Anspruch 1, **dadurch gekennzeichnet, dass** die visuelle Kennzeichnungsinformation in Form eines zweidimensionalen Codes angezeigt wird.

3. Verfahren nach einem der Ansprüche 1 bis 2, **dadurch gekennzeichnet, dass** es einen Aufzeichnungsschritt (202) mindestens eines Teils des Multimedia-Programms in einem Speicherserver enthält.

4. Verfahren nach einem der Ansprüche 1 und 3, **dadurch gekennzeichnet, dass** es im Endgerät die folgenden Schritte enthält:
- Senden einer Anforderung (E7) an den Verwaltungsserver, der einen das Programm enthaltenden Speicherserver steuert, die den Steuerdatenwert enthält;
- zeitversetzte Wiedergabe (211) des Programms ab dem Wiedergabezeitpunkt mit Hilfe eines entsprechenden Signals, das von einem an den Speicherserver angeschlossenen Verwaltungsserver übertragen wird.

5. Verfahren nach Anspruch 4, **dadurch gekennzeichnet, dass** die Anforderung außerdem mindestens eine der Informationen enthält, die zu der Gruppe gehört, die enthält:
- einen Zugangsschlüssel;
- eine Kennung des Benutzers;
- eine Kennung des Multimedia-Programms;
- eine zeitliche Referenz entsprechend dem Wiedergabezeitpunkt.

6. Verfahren nach einem der Ansprüche 1 bis 5, **dadurch gekennzeichnet, dass** es einen Sendeschritt (E4) der Kennzeichnungsinformation an mindestens einen zweiten Benutzer enthält, um eine Wiedergabe des Multimedia-Programms durch den oder die zweiten Benutzer ab dem Wiedergabezeitpunkt zu erlauben.

7. Verfahren nach einem der Ansprüche 1 bis 6, **dadurch gekennzeichnet, dass** der Verarbeitungsschritt die folgenden Schritte enthält:
- Decodierung (207) der Kennzeichnungsinformation, um einen Abfragedatenwert eines Verwaltungsservers zu erhalten;
- Übertragung (E5) des Abfragedatenwerts an den Verwaltungsserver;
- Empfang (E6) von Beschreibungsinformationen des Multimedia-Programms, die vom Verwaltungsserver übertragen werden.

8. Multimedia-Endgerät (112), **dadurch gekennzeichnet, dass** es enthält:
- Wiedergabeeinrichtungen (51) eines Multimedia-Programms auf dem Multimedia-Endgerät, wobei das Multimedia-Programm über ein Kommunikationsnetzwerk übertragen wird;
- Einrichtungen (53) zur Generierung einer Kennzeichnungsanforderung bezüglich eines Wiedergabezeitpunkts des Multimedia-Programms, die auf Befehl eines Benutzers des Endgeräts (112) generiert wird;
- Darstellungseinrichtungen (55) durch das Endgerät einer Kennzeichnungsinformation bezüglich eines Wiedergabezeitpunkts im Multimedia-Programm, um das Multimedia-Programm ab dem Wiedergabezeitpunkt wiederzugeben, wobei die Kennzeichnungsinformation eine visuelle Information in Form eines zweidimensionalen Codes ist, die dazu bestimmt ist, mit Hilfe eines Endgeräts aufgefangen zu werden, das mit Bildaufnahmeeinrichtungen ausgestattet ist, und so verarbeitet zu werden, dass ein Steuerdatenwert eines fernen Verwaltungsservers erhalten wird, der einen Zugang zum Multimedia-Programm erlaubt.

9. Computerprogrammprodukt, das von einem Kommunikationsnetzwerk heruntergeladen und/oder auf einem computerlesbaren Träger gespeichert und/oder auf einem Mikroprozessor ausgeführt werden kann,
**dadurch gekennzeichnet, dass** es Programmanweisungen zur Durchführung der Schritte des Verwaltungsverfahrens eines Multimedia-Programms nach einem der Ansprüche 1 bis 7 enthält, das in einem Multimedia-Endgerät (112) durchgeführt wird.

10. Erfassungs-Endgerät (106), **dadurch gekennzeichnet, dass** es enthält:
- Einrichtungen zur Bildaufnahme (43) einer Kennzeichnungsinformation in einem Multimedia-Programm, das über ein Kommunikationsnetzwerk übertragen wird, wobei die Kennzeichnungsinformation von einem Multimedia-Endgerät geliefert wird und einem Wiedergabezeitpunkt des Multimedia-Programms entspricht, wobei die Kennzeichnungsinformation eine auf einem Bildschirm des Multimedia-Endgeräts angezeigte visuelle Information ist;
- Verarbeitungseinrichtungen (40) der Bildaufnahme der Kennzeichnungsinformation, um das Multimedia-Programm ab dem Wiedergabezeitpunkt wiederzugeben.

11. Verwaltungsverfahren eines Multimedia-Programms, das über ein Kommunikationsnetzwerk übertragen wird, wobei das Verfahren in einem Erfassungs-Endgerät (106) durchgeführt wird, **dadurch gekennzeichnet, dass** es die folgenden Schritte enthält:
- Bildaufnahme (206) einer Kennzeichnungsinformation in einem Multimedia-Programm, geliefert von einem Multimedia-Endgerät (112) und entsprechend einem Wiedergabezeitpunkt des Multimedia-Programms, wobei die Kennzeichnungsinformation eine auf einem Bildschirm des Multimedia-Endgeräts angezeigte visuelle Information ist;
- Verarbeitung (207) der Bildaufnahme der Kennzeichnungsinformation, um das Multimedia-Programm ab dem Wiedergabezeitpunkt wiederzugeben.

12. Computerprogrammprodukt, das von einem Kommunikationsnetzwerk heruntergeladen und/oder von einem Computer gespeichert und/oder von einem Mikroprozessor ausgeführt werden kann, **dadurch gekennzeichnet, dass** es die Programmcodeanweisungen zur Durchführung der Schritte des Verwaltungsverfahrens eines Multimedia-Programms nach Anspruch 11 enthält, das in einem Erfassungs-Endgerät (106) durchgeführt wird.

13. Verwaltungsserver eines Multimedia-Programms, das über ein Kommunikationsnetzwerk übertragen und auf einem Bildschirm eines Multimedia-Endgeräts eines Benutzers wiedergegeben wird, **dadurch gekennzeichnet, dass** er enthält:
- Einrichtungen zum Empfang einer Kennzeichnungsanforderung bezüglich eines Wiedergabezeitpunkts, generiert auf Befehl eines Benutzers des Endgeräts;
- Einrichtungen zur Übertragung einer der Kennzeichnungsanforderung zugeordneten Kennzeichnungsinformation bezüglich eines Wiedergabezeitpunkts des Multimedia-Programms an das Multimedia-Endgerät, wobei die Kennzeichnungsinformation eine visuelle Information in Form eines zweidimensionalen Codes und dazu bestimmt ist, vom Multimedia-Endgerät wiedergegeben und mit Hilfe eines Endgeräts aufgefangen zu werden, das mit Bildaufnahmeeinrichtungen ausgestattet ist;
- Einrichtungen zum Empfang einer Anforderung einer zeitversetzten Übertragung, basierend auf dem Inhalt der Kennzeichnungsinformation;
- Einrichtungen zur Steuerung einer zeitversetzten Übertragung des Multimedia-Programms ab dem Wiedergabezeitpunkt, mit Hilfe des Kennzeichnungsdatenwerts, zum Benutzer und/oder mindestens zu einem zweiten Benutzer.

14. Verwaltungsverfahren von über ein Kommunikationsnetzwerk übertragenen Multimedia-Programmen in einem Verwaltungsserver, die dazu bestimmt sind, auf einem Bildschirm eines Multimedia-Endgeräts eines Benutzers wiedergegeben zu werden, **dadurch gekennzeichnet, dass** es die folgenden Schritte enthält:
- Empfang einer Kennzeichnungsanforderung, die auf Befehl eines Benutzers des Endgeräts generiert wird;
- Übertragung (E3) einer der Kennzeichnungsanforderung zugeordneten Kennzeichnungsinformation bezüglich eines Wiedergabezeitpunkts des Multimedia-Programms an das Multimedia-Endgerät, wobei die Kennzeichnungsinformation eine visuelle Information in Form eines zweidimensionalen Codes und dazu bestimmt ist, vom Multimedia-Endgerät wiedergegeben und mit Hilfe eines Endgeräts aufgefangen zu werden, das mit Bildaufnahmeeinrichtungen ausgestattet ist;
- Empfang einer Anfrage einer zeitversetzten Übertragung, basierend auf dem Inhalt der Kennzeichnungsinformation;
- zeitversetzte Übertragung (E8) des Multimedia-Programms ab dem Wiedergabezeitpunkt, mit Hilfe des Kennzeichnungsdatenwerts, an den Benutzer und/oder mindestens einen zweiten Benutzer.

15. Computerprogrammprodukt, das von einem Kommunikationsnetzwerk heruntergeladen und/oder auf einem computerlesbaren Träger gespeichert und/oder von einem Mikroprozessor ausgeführt werden kann,
**dadurch gekennzeichnet, dass** es Programmcodeanweisungen zur Durchführung der Schritte des Verwaltungsverfahrens von Multimedia-Programmen nach Anspruch 14 in einem Verwaltungsserver enthält.

16. Verwaltungssignal eines Multimedia-Programms, das über ein Kommunikationsnetzwerk von einem Steuerserver an ein Multimedia-Endgerät übertragen wird, **dadurch gekennzeichnet, dass** es Steuerdaten in Form einer Kennzeichnungsinformation in einem Multimedia-Programm als Antwort auf eine Anforderung des Multimedia-Endgeräts und repräsentativ für einen Wiedergabezeitpunkt enthält, wobei die Kennzeichnungsinformation eine visuelle Information in Form eines zweidimensionalen Codes und dazu bestimmt ist, auf einem Bildschirm des Multimedia-Endgeräts angezeigt zu werden.

17. Signal nach Anspruch 16, **dadurch gekennzeichnet, dass** es mindestens eines der folgenden Datenfelder enthält:
- ein einen Zugangsschlüssel (61) tragendes Feld;
- ein eine Kennung (62) des Benutzers tragendes Feld;
- ein eine Kennung (63) des Multimedia-Programms tragendes Feld;
- ein eine zeitliche Referenz (64) entsprechend dem Wiedergabezeitpunkt tragendes Feld.

## Claims

1. Method for managing a multimedia program transmitted via a communication network, comprising the following steps:
- rendition (201) of said multimedia program, by a terminal (112);
- obtaining (205) of a marking information item relating to an instant of rendition of said multimedia program and associated with a marking request generated by order of a user of said terminal;
**characterized in that** said marking information item is a visual information item, intended to be displayed on a screen of said terminal (112), that a taking of a picture of said marking information item is performed (206) with the aid of a terminal (106) equipped with picture taking means and that the picture taken of said marking information item is processed (207) in such a way as to obtain a datum for piloting a remote management server allowing access to said multimedia program so as to render it deferred from said instant of rendition.

2. Method according to Claim 1, **characterized in that** said visual marking information item is displayed in the form of a two-dimensional code.

3. Method according to either one of Claims 1 to 2, **characterized in that** it comprises a step (202) of recording at least one portion of said multimedia program in a storage server.

4. Method according to either one of Claims 1 and 3, **characterized in that** it comprises, in said terminal, the steps of:
- dispatching of a request (E7) to said management server controlling a storage server containing said program, comprising said piloting datum;
- deferred rendition (211) of said program, from said instant of rendition, with the aid of a corresponding signal transmitted by a management server connected to said storage server.

5. Method according to Claim 4, **characterized in that** said request furthermore comprises at least one of the information items belonging to the group comprising:
- an access key;
- an identifier of said user;
- an identifier of said multimedia program;
- a temporal reference corresponding to said instant of rendition.

6. Method according to any one of Claims 1 to 5, **characterized in that** it comprises a step (E4) of dispatching said marking information item to at least one second user, so as to allow a rendition of said multimedia program by said second user or users, from said instant of rendition.

7. Method according to any one of Claims 1 to 6, **characterized in that** said processing step comprises the following steps:
- decoding (207) of said marking information item, to obtain a management server interrogation datum;
- transmission (E5) of said interrogation datum to said management server;
- reception (E6) of description information items, transmitted by said management server, describing said multimedia program.

8. Multimedia terminal (112), **characterized in that** it comprises:
- means (51) for rendering a multimedia program on said multimedia terminal, said multimedia program being transmitted via a communication network;
- means (53) for generating a marking request, relating to an instant of rendition of said multimedia program and generated by order of a user of said terminal (112) ;
- means (55) for presenting, by said terminal, a marking information item relating to an instant of rendition in said multimedia program, so as to render said multimedia program from said instant of rendition, said marking information item being a visual marking information in the form of a two-dimensional code, intended to be captured with the aid of a terminal equipped with picture taking means and to be processed in such a way as to obtain a datum for piloting a remote management server allowing access to said multimedia program.

9. Computer program product downloadable from a communication network and/or stored on a medium readable by a computer and/or executable on a microprocessor,
**characterized in that** it comprises program instructions for the implementation of the steps of the method for managing a multimedia program implemented in a multimedia terminal (112), according to one of Claims 1 to 7.

10. Acquisition terminal (106), **characterized in that** it comprises:
- means (43) for taking a picture of a marking information item in a multimedia program transmitted via a communication network, said marking information item being delivered by a multimedia terminal and corresponding to an instant of rendition of said multimedia program, said marking information item being a visual information item displayed on a screen of said multimedia terminal;
- means (40) for processing the picture taken of said marking information item, so as to render said multimedia program from said instant of rendition.

11. Method for managing a multimedia program transmitted via a communication network, the method being implemented in an acquisition terminal (106), **characterized in that** it comprises the following steps:
- taking a picture (206) of a marking information item in a multimedia program, delivered by a multimedia terminal (112) and corresponding to an instant of rendition of said multimedia program, said marking information item being a visual information item displayed on a screen of said multimedia terminal;
- processing (207) said picture taken of said marking information item, so as to render said multimedia program from said instant of rendition.

12. Computer program product downloadable from a communication network and/or stored by a computer and/or executable by a microprocessor,
**characterized in that** it comprises the program code instructions for the implementation of the steps of the method for managing a multimedia program implemented in an acquisition terminal (106), according to Claim 11.

13. Server for managing a multimedia program transmitted via a communication network and rendered on a screen of a multimedia terminal of a user, **characterized in that** it comprises:
- means for receiving a marking request relating to an instant of rendition and generated by order of a user of said terminal;
- means for transmitting to said multimedia terminal a marking information item relating to an instant of rendition of said multimedia program and associated with said marking request, said marking information item being a visual information item in the form of a two-dimensional code and intended to be rendered by said multimedia terminal and to be captured with the aid of a terminal equipped with picture taking means;
- means for receiving a demand for deferred transmission, based on the content of said marking information item;
- means for controlling a deferred transmission of said multimedia program from said instant of rendition, with the aid of said marking datum, to said user and/or at least one second user.

14. Method for managing multimedia programs, transmitted via a communication network, in a management server, and intended to be rendered on a screen of a multimedia terminal of a user, **characterized in that** it comprises the following steps:
- reception of a marking request generated by order of a user of said terminal;
- transmission (E3) to said multimedia terminal of a marking information item relating to an instant of rendition of said multimedia program and associated with said marking request, said marking information item being a visual information item in the form of a two-dimensional code and intended to be rendered by said multimedia terminal and to be captured with the aid of a terminal equipped with picture taking means;
- reception of a demand for deferred transmission, based on the content of said marking information item;
- deferred transmission (E8) of said multimedia program from said instant of rendition, with the aid of said marking datum, to said user and/or at least one second user.

15. Computer program product downloadable from a communication network and/or stored on a medium readable by computer and/or executable by a microprocessor,
**characterized in that** it comprises program code instructions for the implementation of the steps of the method for managing multimedia programs in a management server, according to Claim 14.

16. Signal for managing a multimedia program, transmitted, via a communication network, by a control server to a multimedia terminal, **characterized in that** it comprises control data in the form of a marking information item in a multimedia program, in response to a request of said multimedia terminal, and representative of an instant of rendition, said marking information item being a visual information item in the form of a two-dimensional code and intended to be displayed on a screen of said multimedia terminal.

17. Signal according to Claim 16, **characterized in that** it comprises at least one of the following data fields:
- a field bearing an access key (61);
- a field bearing an identifier (62) of said user;
- a field bearing an identifier (63) of said multimedia program;
a field bearing a temporal reference (64) corresponding to said instant of rendition.
